# EUROPÄISCHE PATENTSCHRIFT

(11) **EP 1 720 095 B1**
(45) Veröffentlichungstag und Bekanntmachung des Hinweises auf die Patenterteilung: **02.08.2017**
(21) Anmeldenummer: 05009912.6
(22) Anmeldetag: 06.05.2005
(51) Int. Cl.: G06F 9/44

(54) **Verfahren zum Schützen eines ausführbaren ersten Moduls**
Method for protection of an executable first module
Procédé de protection d'un premier module exécutable

(43) Veröffentlichungstag der Anmeldung: 08.11.2006
(73) Patentinhaber: SFNT Germany GmbH, 82110 Germering (DE)
(72) Erfinder: Zunke, Michael, 85551 Kirchheim (DE); Lange, Andreas, 81829 München (DE)
(74) Vertreter: Scheer, Luc

(56) Entgegenhaltungen:
- US-A- 5 673 315
- US-A- 5 956 710
- US-A- 5 974 549
- US-A1- 2002 033 838
- US-A1- 2004 237 071
- US-B1- 6 874 149

## Beschreibung

Die Erfindung betrifft ein Verfahren zum Schützen eines ausführbaren ersten Moduls, das eine Funktion mit einer nach außen sichtbaren Referenz einem ausführbaren zweiten Modul bereitstellt, das die Funktion bei seiner Initialisierung noch vor Ausführung der ersten Anweisung des ersten Moduls nutzt.

Dies tritt z.B. dann auf, wenn das erste Modul eine ausführbare Anwendung und das zweite Modul eine DLL-Datei (bei Windows Betriebssystemen) ist. Beim Starten der Anwendung wird durch das Betriebssystem zuerst die ausführbare Anwendung in den Hauptspeicher des Computers, auf dem die Anwendung ausgeführt werden soll, und danach die DLL-Datei geladen. Dann folgt die Initialisierung für die DLL-Datei, bei der die von der ausführbaren Anwendung bereitgestellte Funktion ausgeführt wird und erst danach wird die ausführbare Anwendung gestartet. Die Patentanmeldung US5959710 offenbart ein Verfahren zum Vorsehen sogenannter user exits, die dazu dienen die Programmkontrolle vom Betriebssystem zum ausführenden Programm zu übergeben. Dies wird dadurch realisiert, dass Pointer in einer Systemservicetabelle im Kernel-Bereich umgebogen beziehungsweise gehookt werden. Wenn man die ausführbare Anwendung gegen unberechtigte Benutzung schützt, liegt sie z. B. in verschlüsselter Form vor und die Entschlüsselung wird erst bei Start der ausführbaren Anwendung selbst durchgeführt. Das bedeutet, daß bei Nutzung der durch die ausführbare Anwendung bereitgestellten Funktion während der Initialisierung der DLL-Datei die Funktion noch in verschlüsselter Form vorliegt und daher nicht benutzt werden kann, so daß eine Fehlermeldung auftritt und die Anwendung nicht ausgeführt wird.

Um diese Schwierigkeit zu umgehen, wird bisher abgeschätzt, in welchem Bereich in der ausführbaren Anwendung die bereitgestellte Funktion liegt und dieser Bereich wird von der Verschlüsselung ausgespart. Dies ist jedoch einerseits aufwendig und andererseits sehr ungenau und führt nachteilig dazu, daß weitere Teile der Anwendung unverschlüsselt vorliegen.

Ausgehend hiervon ist es Aufgabe der Erfindung, ein Verfahren zum Schützen eines ausführbaren ersten Moduls, das eine Funktion mit einer nach außen sichtbaren Referenz einem ausführbaren zweiten Modul bereitstellt, das die Funktion bei seiner Initialisierung noch vor der Ausführung der ersten Anweisung des ersten Moduls nutzt, bereitzustellen.

Die Aufgabe wird gelöst durch ein Verfahren zum Schützen eines ausführbaren ersten Moduls, das eine Funktion mit einer nach außen sichtbaren Referenz einem ausführbaren zweiten Modul bereitstellt, das die Funktion bei seiner Initialisierung noch vor der Ausführung des ersten Moduls nutzt, wobei bei dem Verfahren zumindest ein Teil des die Funktion realisierenden Codes des ersten Moduls verschlüsselt wird, ausführbarer Code zum ersten Modul hinzugefügt und anhand der Referenz im ersten Modul eine Umleitung auf den hinzugefügten Code vorgesehen wird, so daß ein geändertes erstes Modul vorliegt, in dem bei Aufruf der Funktion der Ausführungspfad aufgrund der Umleitung auf den hinzugefügten Code umgeleitet wird, der bei seiner Ausführung den verschlüsselten Code der Funktion so entschlüsselt, daß die Funktion ausgeführt werden kann.

Es wird bei dem erfindungsgemäßen Verfahren somit die Tatsache genutzt, daß die vom ersten Modul bereitgestellte Funktion eine nach außen sichtbare Referenz aufweist, anhand der der Startpunkt der Funktion im ersten Modul abgeleitet werden kann, obwohl das erste Modul bereits als ausführbares Modul vorliegt, in der Regel also in compilierter Form bzw. in Maschinencode. Anhand der Referenz wird in das erste Modul eine Umleitung eingebaut, die dazu führt, daß der hinzugefügte Code Kontrolle über das erste Modul erlangen kann, bevor es vom Betriebssystem gestartet wird, d.h. bevor die Startanweisung des ersten Moduls ausgeführt wird. Dadurch wird es möglich, auch den die Funktion realisierenden Code des ersten Moduls zu verschlüsseln, da, selbst wenn die Funktion vor Start des ersten Moduls aufgerufen wird, aufgrund der Umleitung die Ausführung des hinzugefügten Codes erfolgt, der die notwendige Entschlüsselung der entsprechenden Anweisungen der Funktion des ersten Moduls durchführt.

Es ist also möglich, ein erstes ausführbares Modul, das eine Funktion einem zweiten ausführbaren Modul zur Verfügung stellt, zu verschlüsseln und damit gegen unberechtigte Benutzung zu schützen, wenn die Funktion des ersten Moduls noch vor seiner ersten Ausführung genutzt wird.

Natürlich kann bei dem Verfahren der gesamte Code der Funktion oder sogar das gesamte erste Modul verschlüsselt werden.

Die erfindungsgemäßen Schritte werden vor Ausführung der Module bevorzugt so durchgeführt, daß der Code und die Umleitung dauerhaft (statisch) hinzugefügt sind.

Als ausführbares Modul wird hier jedes Modul verstanden, das für die Laufzeitumgebung (beispielsweise Hardware plus entsprechendes Betriebssystem) in einer solchen Form vorliegt, daß es zu seiner Ausführung nur noch in den Speicher des Computers bzw. der Laufzeitumgebung geladen, ggf. initialisiert und gestartet werden muß. Das Modul kann dabei selbständig lauffähig (ausführbares Modul) sein oder es kann für die Ausführung noch weitere ausführbare Module benötigen (abhängig ausführbares Modul). Insbesondere kann das Modul in compilierter Form vorliegen. Bei Windows-Betriebssystemen kann das ausführbare Modul eine EXE-Datei oder eine DLL-Datei sein. Bei der .net-Umgebung von Microsoft oder sonstigen objektorientierten Umgebungen kann das Modul ein sogenanntes Assembly, eine Klassenbibliothek oder eine Klasse sein und bei Unix basierten Betriebssystemen kann das Modul z.B. eine Shared Library sein. Das erste und das zweite ausführbare Modul können in derselben Datei oder auch in separaten Dateien vorliegen.

Die nach außen sichtbare Referenz kann als Metadatum oder Metadaten vorliegen. Unter Metadaten werden hier Hilfsdaten verstanden, die die Laufzeitumgebung benötigt, um das Modul in den Speicher laden, initialisieren und/oder starten zu können, die aber der Code des Moduls selbst nicht benötigt. Zu den Metadaten gehören insbesondere Informationen über den Startpunkt der Funktion.

Das erste Modul kann Metadaten in Form einer Exporttabelle aufweisen, in der als Referenz ein Verweis auf den Startpunkt der Funktion im ersten Modul hinterlegt ist. Die Exporttabelle wird beim Laden des ersten Moduls von der Laufzeitumgebung ausgewertet, um die Möglichkeit des Aufrufes der Funktion von anderen Modulen, die auch in den Speicher geladen werden, zu gewährleiten. In einer Weiterbildung des erfindungsgemäßen Verfahrens wird in der Exporttabelle die Umleitung auf den hinzugefügten Code hinterlegt. Damit kann in einfacher Weise die gewünschte Umleitung dauerhaft in das erste Modul eingefügt werden.

Ferner ist es möglich, anhand der nach außen sichtbaren Referenz den Bereich im ersten Modul zu ermitteln, in dem Anweisungen der bereitgestellten Funktion liegen, und dort weiteren Code vorzusehen, der auf den hinzugefügten Code verweist. Insbesondere kann ein Teil des ursprünglichen Codes durch den weiteren Code ersetzt werden. Insbesondere wird der weitere Code am Anfang der Funktion (z. B. die erste, zweite, dritte ... Anweisung) eingefügt. Der Zusatzcode kann eine Rücksprunganweisung enthalten, die zu einer dem ersetzten Code nachfolgenden Anweisung der Funktion weist.

Zum ersten Modul kann Code hinzugefügt werden, der vor der Entschlüsselung eine Lizenzüberprüfung durchführt und die Entschlüsselung nur dann zuläßt, wenn bei der Lizenzüberprüfung das Vorliegen einer Lizenz festgestellt wird. Es wird somit ein Schutz gegen unberechtigte Ausführung des ersten Moduls realisiert.

Es kann Code hinzugefügt werden, der bei Aufruf der Funktion übergebene Daten speichert und diese nach Entschlüsselung an die Funktion übergibt. Damit wird die korrekte Ausführung der Funktion gewährleistet.

Ferner kann der hinzugefügte Code eine Rücksprunganweisung enthalten, die auf die entschlüsselte Funktion zeigt. Dies gewährleistet wiederum die Durchführung der Funktion nach der erfolgten Entschlüsselung.

Ferner wird ein Computerprogrammprodukt bereitgestellt, das Softwarecode umfaßt, um die Schritte des erfindungsgemäßen Verfahrens bzw. einer seiner Weiterbildungen durchzuführen, wenn das Produkt auf einem Computer ausgeführt wird.

Die Erfindung wird nachfolgend beispielshalber anhand der Zeichnungen noch näher erläutert. Es zeigen:
- Fig. 1: eine schematische Ansicht von zwei Modulen einer zu schützenden Anwendung;
- Fig. 2: eine schematische Ansicht der geschützten Anwendung von Fig. 1;
- Fig. 3: eine schematische Ansicht einer in anderer Weise geschützten Anwendung von Fig. 1 und
- Fig. 4: eine schematische Ansicht einer weiteren Möglichkeit des Schutzes der Anwendung von Fig. 1.

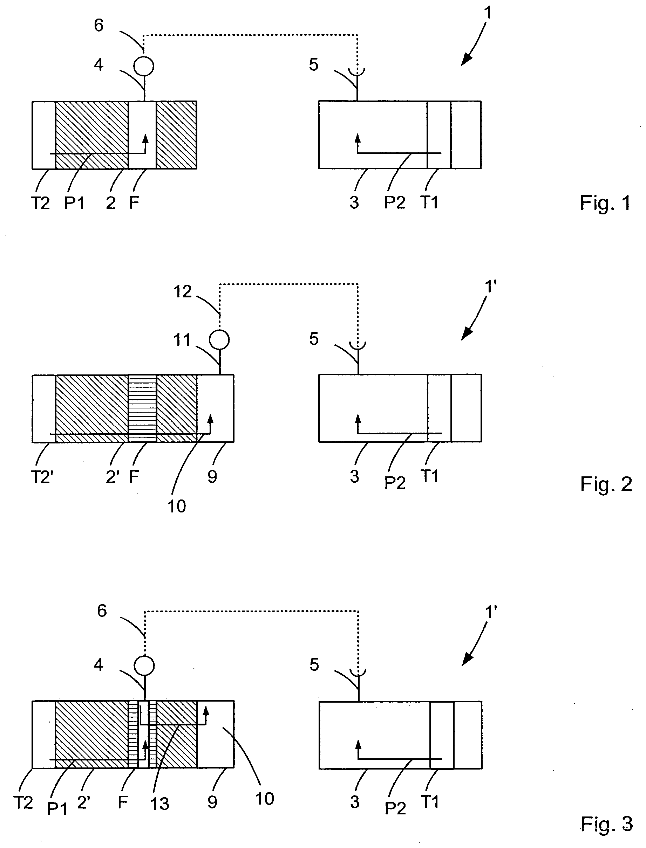

Wie in Fig. 1 schematisch dargestellt ist, umfaßt ein ausführbares Programmpäket 1 eine zu schützende ausführbare Anwendung 2 (erstes Modul, hier in Form einer EXE-Datei für Windows Betriebssysteme) und ein ausführbares zweites Modul 3 (hier in Form einer DLL-Datei).

Die Anwendung 2 stellt dem zweiten Modul 3 eine Funktion über eine Import/Export-Schnittstelle zur Verfügung. Dies ist schematisch dadurch angedeutet, daß die Anwendung 2 einen Export 4 und das zweite Modul 3 einen Import 5 aufweist. Die Verbindung wird mittels der gestrichelten Linie 6 symbolisiert.

Die notwendigen Daten bzw. die Metadaten für diese Import/Export-Schnittstelle 6 sind in bekannter Weise in der Anwendung 2 und dem zweiten Modul 3 in einer Importtabelle T1 im zweiten Modul 3 sowie einer Exporttabelle T2 in der Anwendung 2 (durch Pfeile P1 und P2 angedeutet) hinterlegt. Sowohl die Import- als auch die Exporttabelle T1, T2 sind von außen einsehbar und bilden daher eine nach außen sichtbare Referenz der dem zweiten Modul 3 bereitgestellten Funktion. Das bedeutet, daß zwar die Anwendung 2 und das zweite Modul 3 in compilierter und somit ausführbarer Form vorliegen, jedoch die Import- und Exporttabelle T1, T2 aufgrund der bekannten Struktur von außen ohne Probleme ausgelesen werden kann.

Das zweite Modul 3 dient im hier beschriebenen Beispiel zur Überprüfung des Vorliegens einer Lizenz zur Ausführung der Anwendung 2, aber benötigt seinerseits von der Anwendung 2 eine bereitgestellte Funktion F.

Während des Ladens der Anwendung 2 und dem zweiten Modul 3 kann es nun in Abhängigkeit der Lautzeitumgebung dazu kommen, daß bei der Initialisierung des zweiten Moduls 3 die Funktion F der Anwendung 2 benötigt wird. Da zu diesem Zeitpunkt die Anwendung 2 noch nicht gestartet ist, muß die Funktion F in ausführbarer Weise vorliegen, d.h. unverschlüsselt. Die restlichen Bereiche der Anwendung 2 sind hingegen verschlüsselt, wie dies durch schraffierte Bereiche abgedeutet ist.

Erfindungsgemäß wird nun ein Änderungsschritt durchgeführt, bei dem die Funktion F verschlüsselt wird (durch eine horizontale Schraffur angedeutet), Zusatzcode 9 zur Anwendung 2 hinzugefügt wird und anhand der Referenz (Exporttabelle T2) eine Umleitung 10 auf den Zusatzcode 9 hinterlegt wird. Dies wird hier dadurch realisiert, daß die Exporttabelle entsprechend geändert wird, so daß eine geänderte Exporttabelle T2' vorliegt. Insgesamt wird damit in der Anwendung die Exporttabelle geändert, Zusatzcode 9 hinzugefügt und eine Umleitung 10 vorgesehen. Daher umfaßt der Zusatzcode 9 einen eigenen Export 11, der den bisherigen Export 4 ersetzt und über den eine Verbindung 12 zum Import 5 des zweiten Moduls 3 möglich ist, so daß eine geänderte Anwendung 2' und damit auch ein geändertes Programmpaket 1' vorliegt.

Wenn nun während der Initialisierung des zweiten Moduls 3 die Funktion F aufgerufen wird, wird dieser Aufruf aufgrund der geänderten Exporttabelle T2' in den Zusatzcode 9 umgeleitet, der eine Entschlüsselung des Bereiches der Funktion F durchführt und danach die Ausführung der Funktion F bewirkt. Somit wird durch das erfindungsgemäße Verfahren sichergestellt, daß selbst ein Aufruf der Funktion F der Anwendung 2' während der Initialisierung des zweiten Moduls 3 (also noch vor dem Start bzw. der Ausführung der ersten Anweisung der Anwendung 2') erfolgen kann, obwohl die Funktion F in verschlüsselter Form vorliegt.

Es wird somit durch das erfindungsgemäße Verfahren das Programmpaket 1 von Fig. 1 in ein geändertes Programmpaket 1' überführt, in dem statisch und dauerhaft die Änderung der Exporttabelle, die Verschlüsselung der Funktion F sowie die Hinzufügung des Zusatzcodes 9 vorliegt.

In Fig. 3 ist ein Beispiel für ein geändertes Programmpaket 1' gezeigt, das wiederum ausgehend von dem Programmpaket 1 der Fig. 1 erzeugt wurde. Im Änderungsschritt wurde dabei nicht der gesamte Bereich (ein Teil des Anfangs der Funktion bleibt unverschlüsselt) der Funktion F verschlüsselt (waagrechte Schraffur) sowie Zusatzcode 9 hinzugefügt. Die Umleitung auf den Zusatzcode 9 wurde jedoch nicht wie bei dem Beispiel in Fig. 2 durch eine Änderung der Exporttabelle T2 durchgeführt, sondem es wurde anhand der nach außen sichtbaren Referenz der Funktion der Anwendung 2 der Startpunkt der Funktion F ermittelt und an diesem Startpunkt wurde zumindest eine zusätzliche Anweisung vorgesehen, die eine ursprüngliche Anweisung der Funktion zumindest teilweise ersetzt und die eine Umleitung in den Zusatzcode 9 bewirkt, wie dies durch den Pfeil 13 angedeutet ist. Die Anwendung 2' und somit auch das Programmpaket 1' liegen in geänderter Form vor.

Das bedeutet, daß auch in diesem Beispiel bei Aufruf der Funktion F noch während der Initialisierung des zweiten Moduls 3 vor der Ausführung der ersten Anweisung der Anwendung 2 die statisch eingebundene Umleitung 13 dazu führt, daß der Zusatzcode 9 ausgeführt wird. Damit gelangt die Kontrolle über die Anwendung zum Zusatzcode 9, der nun die Funktion F entschlüsseln kann. Bevorzugt ist der Zusatzcode 9 so ausgelegt, daß er zuerst eine Lizenzüberprüfung durchführt und nur bei Vorliegen der Lizenz die Entschlüsselung der Funktion und Ausführung der Funktion F bewirkt.

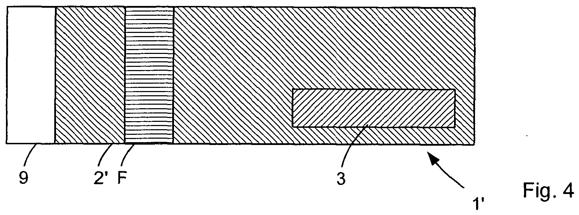

In Fig. 4 ist ein geändertes Programmpaket 1' gezeigt, bei dem das zweite Modul 3 vollständig in die Anwendung 2' integriert ist. Damit entfällt die Schwierigkeit der Initialisierung des zweiten Moduls 3 vor der Ausführung der Anwendung 2' und die gesamte Anwendung 2' (einschließlich der Funktion F) und auch des zweiten Moduls 3 kann verschlüsselt werden, wie dies durch die eingefügten Schraffuren angedeutet ist. Der Zusatzcode 9, der zu der Anwendung 2' hinzugefügt ist, dient zu der notwendigen Entschlüsselung. Bevorzugt wird hier auch eine Lizenzüberprüfung vor der Entschlüsselung durchgeführt.

Natürlich muß die zu schützende Anwendung 2 nicht schon teilweise verschlüsselt sein, wie dies in den obigen Ausführungsbeispielen der Fall ist. Sie kann vollständig unverschlüsselt sein und die Verschlüsselung der Anwendung 2 wird zusammen mit der Verschlüsselung der Funktion F durchgeführt.

## Patentansprüche

1. Verfahren zum Schützen eines ausführbaren ersten Moduls, (2) das eine Funktion mit einer nach außen sichtbaren Referenz (T2) einem ausführbaren zweiten Modul (3) bereitstellt, das die Funktion bei seiner Initialisierung noch vor der Ausführung der ersten Anweisung des ersten Moduls (2) nutzt, bei dem zumindest ein Teil des die Funktion realisierenden Codes (F) des ersten Moduls verschlüsselt wird, ausführbarer Zusatzcode (9) zum ersten Modul (2) hinzugefügt und anhand der Referenz in dem ersten Modul eine Umleitung auf den Zusatzcode (9) vorgesehen wird, so daß ein geändertes erstes Modul (2') vorliegt, in dem bei Aufruf der Funktion der Ausführungspfad aufgrund der Umleitung auf den Zusatzcode (9) umgeleitet wird, der bei seiner Ausführung den verschlüsselten Code der Funktion (F) so entschlüsselt, daß die Funktion ausgeführt werden kann.

2. Verfahren nach Anspruch 1, bei dem das erste Modul eine Exporttabelle (T2) aufweist, in der als Referenz ein Verweis auf den Startpunkt der Funktion im ersten Modul hinterlegt ist, wobei in der Exporttabelle die Umleitung auf den Zusatzcode (9) hinterlegt wird.

3. Verfahren nach Anspruch 1, bei dem zur Umleitung auf den Zusatzcode im ersten Modul, in dem Bereich, in dem Anweisungen der bereitgestellten Funktion liegen, weiterer Code vorgesehen wird, der auf den Zusatzcode verweist.

4. Verfahren nach einem der obigen Ansprüche, bei dem Zusatzcode hinzugefügt wird, der vor der Entschlüsselung eine Lizenzüberprüfung durchführt und die Entschlüsselung nur dann zuläßt, wenn bei der Lizenzüberprüfung das Vorliegen einer Lizenz festgestellt wird.

5. Verfahren nach einem der obigen Ansprüche, bei dem Zusatzcode hinzugefügt wird, der bei Aufruf der Funktion übergebene Daten speichert und diese nach Entschlüsselung an die Funktion übergibt.

6. Verfahren nach einem der obigen Ansprüche, bei dem der Zusatzcode eine Rücksprunganweisung enthält, die auf die entschlüsselte Funktion zeigt.

7. Computerprogrammprodukt, das Softwarecode umfaßt, um die Schritte eines der obigen Verfahrensansprüche durchzuführen, wenn das Produkt auf einem Computer ausgeführt wird.

## Claims

1. A method for protecting an executable first module, the first module providing a function having an externally visible reference to an executable second module, the second module utilizing the function, during its initialization, still prior to an execution of the first instruction of the first module, in which at least a part of the code, carrying out the function, of the first module is encrypted, executable additional code is added to the first module and, based on the reference in the first module, a rerouting to the additional code is provided, so that a changed first module is present in which, upon invoking the function, due to the rerouting to the additional code, the execution path is rerouted, the additional code, during its execution, decrypts the encrypted code of the function such that the function can be executed.

2. The method according to claim 1, wherein the first module includes an export table in which an indication of the starting point of the function in the first module is stored as the reference, the rerouting to the additional code being stored in the export table.

3. The method according to claim 1, wherein, to reroute to the additional code, further code that refers to the additional code is provided in the first module in the area in which instructions of the provided function are located.

4. The method according to any of the previous claims, wherein additional code is added which, prior to the decryption, carries out a license check and authorizes the decryption only when the existence of a license is determined during the license check.

5. The method according to any of the previous claims, wherein additional code is added which stores data transferred upon invoking the function and transfers this data to the function after decryption.

6. The method according to any of the previous claims, wherein the additional code includes a return indication which points at the decrypted function.

7. A computer program product comprising software code to carry out the steps of any of the previous method claims, when the product is executed on a computer.

## Revendications

1. Procédé de protection d'un premier module exécutable, le premier module fournissant une fonction avec une référence visible de l'extérieur pour un deuxième module exécutable, le deuxième module utilisant la fonction lors de son initialisation bien avant l'exécution de la première instruction du premier module, dans lequel au moins une partie du code, réalisant la fonction, du premier module est chiffrée, un code additionnel exécutable est ajouté au premier module, et un reroutage vers le code additionnel est prévu sur la base de la référence dans le premier module, de sorte qu'un premier module modifié est présent, premier module modifié dans lequel, lors de l'appel de la fonction, le chemin d'exécution est rerouté en raison du reroutage vers le code additionnel, le code additionnel déchiffre, lors de son exécution, le code chiffré de la fonction , de sorte que la fonction peut être exécutée.

2. Procédé selon la revendication 1, dans lequel le premier module présente un tableau d'export dans lequel une indication du point de départ de la fonction dans le premier module est mise en mémoire en tant que référence, le reroutage vers le code additionnel étant mis en mémoire dans le tableau d'export.

3. Procédé selon la revendication 1, dans lequel, pour le reroutage vers le code additionnel, un autre code renvoyant au code additionnel est prévu dans le premier module dans la zone dans laquelle des instructions de la fonction fournie sont présentes.

4. Procédé selon l'une des revendications précédentes, dans lequel un code additionnel est ajouté, le code additionnel réalisant une vérification de licence avant le déchiffrage et autorise le déchiffrage uniquement lorsque la présence d'une licence est détectée lors de la vérification de licence.

5. Procédé selon l'une des revendications précédentes, dans lequel un code additionnel est ajouté, le code additionnel mémorisant des données transmises lors de l'appel de la fonction et transmet ces données à la fonction après le déchiffrage.

6. Procédé selon l'une des revendications précédentes, dans lequel le code additionnel comporte une instruction de retour pointant vers la fonction déchiffrée.

7. Produit de programme informatique comportant un code de logiciel pour réaliser les étapes de l'une des revendications de procédé précédentes lorsque le produit est exécuté par un ordinateur.
